# EUROPEAN PATENT SPECIFICATION

(11) **EP 0 366 458 B1**
(45) Date of publication and mention of the grant of the patent: **28.06.1995**
(21) Application number: 89311039.5
(22) Date of filing: 26.10.1989
(51) Int. Cl.: G06F 12/06

(54) **Data processing system wherein a simple peripheral control arrangement enables a CPU to access an enlarged address area**
Datenverarbeitungsanordnung, in welcher eine einfache Peripheriesteuerungseinrichtung es einer zentralen Verarbeitungseinheit ermöglicht, auf einen erweiterten Adressbereich zuzugreifen
Système de traitement de données dans lequel un simple dispositif de commande périphérique permet à une unité centrale de traitement d'accéder à une zone d'adresse étendue

(30) Priority: 26.10.1988 JP 269947/88
(43) Date of publication of application: 02.05.1990
(73) Proprietor: NEC CORPORATION, Tokyo (JP)
(72) Inventor: Takizawa, Hiroshi c/o NEC Corporation, Minato-ku Tokyo (JP)
(74) Representative: Orchard, Oliver John

(56) References cited:
- E.D.N. ELECTRICAL DESIGN NEWS, vol. 30, no. 20, September 1985, pages 303-304, Newton Massachusetts, US; J. HARDWAY: "146805 muP addresses an extra 10K bytes"
- EDN - ELECTRICAL DESIGN NEWS, vol. 32, no. 9, 30th April 1987, pages 189-194, 196, 198, Newto, MA, US; T. KENDALL: "Page addressing expands addressable memory in muP systems"
- PATENT ABSTRACTS OF JAPAN, vol. 4, no. 1 (E-163), 8th January 1980, page 107 E163; & JP-A-54 142 025 (TOKYO SHIBAURA DENKI K.K.) 05-11-1979
- ELECTRONIC DESIGN, vol. 26, no. 9, April 1978, pages 84-92; G. FIELLAND et al.: "Keep the memory interface simple"

## Description

This invention relates to a data processing system and, in particular, to a data processing system including a peripheral control arrangement for controlling a plurality of peripheral units in response to an output address signal which is supplied from a central processing unit.

A data processing system comprises a central processing unit (CPU) and a plurality of peripheral units. The peripheral units are divided into a specific one and remaining ones. The specific one of the peripheral units, namely, a specific peripheral unit, may be a read-only memory (ROM) having a program memory area for memorizing a program which is carried out by the central processing unit. The remaining ones of the peripheral units, namely, remaining peripheral units, may comprise a random access memory (RAM) for use as a work area and input/output devices for use as an input/output area.

The central processing unit is connected to the peripheral units through on address bus, a data bus, and a control bus. The central processing unit has an address output port connected to the address bus. The address output port is for producing an output address signal which consists of (n + 1) bits arranged from a most significant bit 2ⁿ to a least significant bit 2⁰, where n represents a first predetermined natural number. The read-only memory has an address input port connected to the address bus. The address input port is for receiving the output address signal as an input address signal which consists of (n + 1) bits arranged from the most significant bit 2ⁿ to the least significant bit 2⁰.

Inasmuch as the central processing unit produces the output address signal which is (n + 1) bits long, the central processing unit is directly capable of accessing on address area of 2ⁿ⁺¹ bytes. Such an address area includes the program memory area and is herein called a directly-accessible address area. The directly-accessible address area is determined by the number of the bits of the output address signal.

Recently, almost all of 8-bit central processing units have the address bus of 16 bits long. Therefore, such an 8-bit central processing unit has the directly-accessible address area of 64 Kbytes.

The central processing unit must access not only the program memory area but also the work area and the input/output area. In other words, the central processing unit must access, as an accessing address area, a wider address area which is equal to a sum of the program memory area, the work area, and the input/output area. If the central processing unit can access only the directly-accessible address area, the program memory area is limited by an area which is equal to a sum of the work area and the input/output area. Therefore, it is necessary to enlarge the directly-accessible address area to the accessing address area. In order to enlarge an address area accessed by the central processing unit to the accessing address area, various methods which are not the subject of an earlier publication, but which are known to and have been tried by the applicants, will now be described.

A first method enlarges the directly-accessible address area to an enlarged address area by using a memory management unit (MMU) for the central processing unit. The memory management unit acts as a peripheral control arrangement for controlling the peripheral units in response to the output address signal so as to enable a selected one of the peripheral units. A second method adopts a central processing unit with the memory management unit. In a third method, the central processing unit is exchanged for a different central processing unit capable of accessing a wider address area which is wider than the directly-accessible address area.

Each of the first through the third methods can enlarge the directly-accessible address area to the enlarged address area which is several to tens times as wide as the directly-accessible address area.

The data processing system may be control equipment for use in an automobile telephone terminal. In the control equipment, the program memory area is slightly narrower than the directly-accessible address area but the directly-accessible address area is slightly narrower than the accessing address area which is extremely narrower than the enlarged address area. In this case, each of the first through the third methods is disadvantageous in that an increased number of circuit elements are necessary and that the data processing system becomes expensive.

In a report by Jay Hardway under the heading "Design Ideas", in EDN, Electrical Design News, Vol. 30, No. 20, Newton, Massachusetts, USA., for September 1985 on pages 303-304 and entitled "146805 »P addresses an extra 10k bytes", there was proposed a circuit which enabled memory paging to be implemented, thereby increasing the 8k bytes of external memory normally addressed.

An article in EDN, Electrical Design News, Vol. 32, No. 9, Newton, MA., USA, dated April 30 1987 on pages 189-194, 196 and 198, by Terry Kendall and entitled "Page addressing expands addressable memory in »P systems" proposed arrangements for overcoming the limited addressable memory of 8-bit processors, using paging routines which save the old page number, isolating the two most significant bits of the destination and using these bits to change the page and allow the remaining bits to contain the sub-routine's relative address.

An address system for securing a control for both memories of the software and the firmware via the same control circuit, thus simplifying the control by turning the highest-rank bit of the memory address to "1" at the starting time of the firmware was proposed in the Specification of a Japanese patent application published under No. 54-142025 on May 11 1979 in the name of Tokyo Shibaura Denki K.K., according to Patent Abstracts of Japan, Vol. 4, No. 1 (E-163) dated January 8 1980 at page 107,E,163.

A description of proposals by Gary Fielland and Ken Oishi for designing a dynamic RAM into a microprocessor system employing memory-refreshing appeared in Electronic Design Vol. 26, No. 9 on April 26 1978 at pages 84-92 under the title "Keep the memory interface simple".

Features of the present invention include the provision of a data processing system wherein a peripheral control arrangement which enables a central processing unit to access an enlarged address area has a simple structure.

A data processing system to which this invention is applicable is defined in claim 1. The data processing system comprises a central processing unit for producing an output address signal which consists of (n + 1) bits arranged from a most significant bit 2ⁿ to a least significant bit 2⁰, where n represents a first predetermined natural number, a plurality of peripheral units, a specific one of which is for receiving an input address signal consisting of (n + 1) bits arranged from the most significant bit 2ⁿ to the least significant bit 2⁰, and a peripheral control arrangement connected to the central processing unit and to the peripheral units for controlling the peripheral units in response to the output address signal so as to enable a selected one of the peripheral units. In an embodiment of the invention to be described, the specific one of the peripheral units is supplied with the n bits among the (n + 1) bits of the output address signal as the n bits among the (n + 1) bits of the input address signal. The n bits of each of the output and the input address signals are the (n + 1) bits except for an m-th bit 2^{m} as counted from the least significant bit 2⁰, where m represents a second predetermined natural number which is not greater than the first predetermined natural number. The central processing unit produces an address selection control bit. The peripheral control arrangement comprises (1) peripheral selecting means connected to the central processing unit and to the peripheral units for selecting, in response to the output address signal, one of the peripheral units as the selected one of the peripheral units; (2) bit holding means supplied with the address selection control bit for holding the address selection control bit as a held control bit; (3) bit processing means connected to the bit holding means and to the central processing unit for processing, in response to the held control bit, the m-th bit 2^{m} of the output address signal into a processed bit; and (4) bit supplying means connected to the bit processing means and to the specific one of the peripheral units for supplying the processed bit as the m-th bit 2^{m} of the input address signal to the specific one of the peripheral units.

The following description and drawings disclose, by means of an example, the invention which is characterised in the appended claims, whose terms determine the extent of the protection conferred hereby:-

In the drawings:-
Fig. 1 is a block diagram of a data processing system according to an embodiment of the present invention;
Fig. 2 is a block diagram of a gate circuit for use in the data processing system illustrated in Fig. 1;
Fig. 3 shows an address space of a central processing unit of the data processing system depicted in Fig. 1 and is for use in describing operation of the data processing system when the gate circuit shown in Fig. 2 is employed;
Fig. 4 is a block diagram of another gate circuit for use in the data processing system illustrated in Fig. 1;
Fig. 5 shows another address space of the central processing unit for use in describing operation of the data processing system when the gate circuit shown in Fig. 4 is employed;
Fig. 6 is a block diagram of control equipment for use in an automobile terminal to which the data processing system according to this invention is applied;
Fig. 7 shows a program memory area of a read-only memory of the control equipment illustrated in Fig. 6;
Fig. 8 shows an address space of the central processing unit for use in describing operation of the control equipment illustrated in Fig. 6; and
Fig. 9 is a flow chart for use in describing operation of the control equipment illustrated in Fig. 6.

### Description of the Preferred Embodiment:

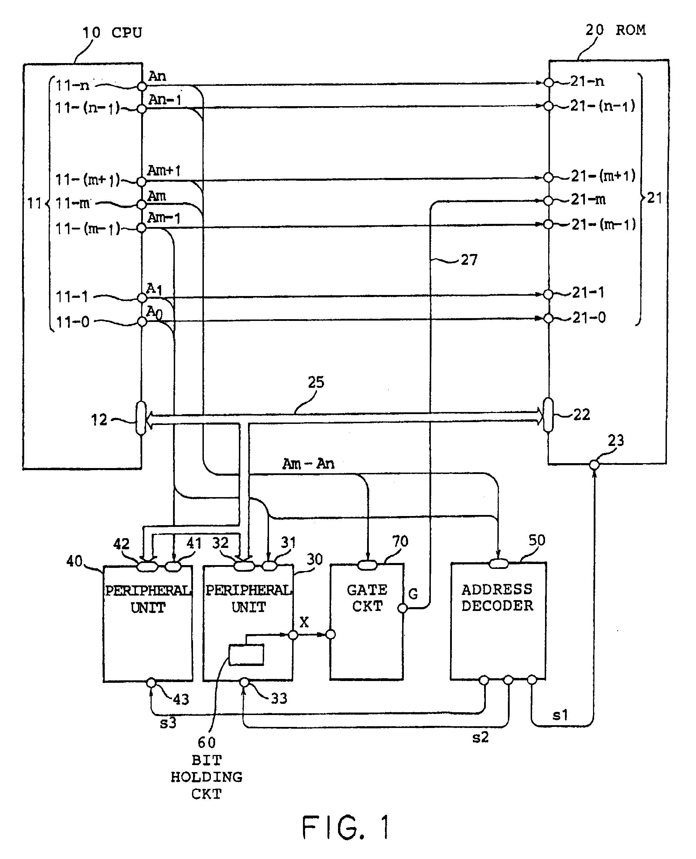

Referring to Fig. 1, the description will begin with a data processing system according to a preferred embodiment of the present invention. The data processing system includes a central processing unit (CPU) 10 having an address output port 11 for producing an output address signal. The address output port 11 will later be described in detail. The output address signal consists of (n + 1) bits arranged from a most significant bit or an n-th bit 2ⁿ to a least significant bit or a zeroth bit 2⁰, where n represents a first predetermined natural number. The zeroth through the n-th bits 2⁰ to 2ⁿ of the output address signal are depicted at A₀ to Aₙ, respectively. The central processing unit 10 further has a CPU input/output port 12 which will later be described in detail.

The data processing system further comprises a plurality of peripheral units. The peripheral units are divided into a specific one and remaining ones which will become clear as the description proceeds. In the example being illustrated, the specific one of the peripheral units, namely, a specific peripheral unit, is a read-only memory (ROM) 20 which has a memory capacity of 2ⁿ⁺¹ bytes. The read-only memory 20 has an ROM address input port 21 for receiving an ROM input address signal. The ROM address input port 21 will later be described in detail.

The ROM input address signal consists of (n + 1) bits arranged from the most significant bit 2ⁿ to the least significant bit 2⁰. The ROM address input port 21 is directly supplied with the n bits among the (n + 1) bits of the output address signal as the n bits among the (n + 1) bits of the ROM input address signal. The n bits of each of the output and the input address signals are the (n + 1) bits except for an m-th bit 2^{m} as counted from the least significant bit 2⁰, where m represents a second predetermined natural number which is not greater than the first predetermined natural number.

The read-only memory 20 has a program memory area (now shown) for memorizing a program which the central processing unit 10 should carry out. The read-only memory 20 further has an ROM input/output port 22 and an ROM selection input terminal 23. The ROM input/output port 22 is connected to the CPU input/output port 12 through an input/output bus 25. In the manner which will later become clear, the input/output bus 25 is divided into a data bus and a control bus. The ROM selection input terminal 23 is for receiving an ROM selection signal which will later become clear.

More specifically, the address output port 11 of the central processing unit 10 comprises zeroth through n-th address output terminals 11-0, 11-1, ..., 11-(m-1), 11-m, 11-(m+1), ..., 11-(n-1), and 11-n for producing the zeroth through the n-th bits A₀, A₁, ..., Aₘ₋₁, Aₘ, Aₘ₊₁, ..., Aₙ₋₁, and Aₙ, respectively. The ROM address input port 21 of the read-only memory 20 comprises zeroth through n-th address output terminals 21-0, 21-1, ..., 21-(m-1), 21-m, 21-(m+1), ..., 21-(n-1), and 21-n. The zeroth through the (m-1)-th output terminals 21-0 to 21-(m-1) of the ROM address input port 21 are supplied with, as the zeroth through the (m-1)-th bits 2⁰ to 2^{m-1} of the ROM input address signal, the zeroth through the (m-1)-th bits A₀ to Aₘ₋₁ from the zeroth through the (m-1)-th address output terminals 11-0 to 11-(m-1) of the address output port 11. The (m+1)-th through the n-th output terminals 21-(m+1) to 21-n of the ROM address input port 21 are supplied with, as the (m+1)-th through the n-th bits 2^{m+1} to 2ⁿ of the ROM input address signal, the (m+1)-th through the n-th bits Aₘ₊₁ to Aₙ from the (m+1)-th through the n-th address output terminals 11-(m+1) to 11-n of the address output port 11. The m-th output terminal 21-m of the ROM address input port 21 is supplied through a connection line 27 with, as the m-th bit 2^{m} of the ROM input address signal, a processed bit G which will later become clear.

The (m+1)-th through the n-th bits Aₘ₊₁ to Aₙ of the output address signal are supplied to the remaining ones of the peripheral units, namely, remaining peripheral units which are depicted at 30 and 40. The remaining peripheral units 30 and 40 have peripheral address input ports 31 and 41 for receiving a combination of the (m+1)-th through the n-th bits Aₘ₊₁ to Aₙ of the output address signal as a peripheral input address signal. The remaining peripheral units 30 and 40 further have peripheral input/output ports 32 and 42 and peripheral selection input terminals 33 and 43. The peripheral input/output ports 32 and 42 are connected to the CPU input/output port 12 through the input/output bus 25. The peripheral selection input terminals 33 and 43 are for receiving peripheral selection signals which will later become clear.

In the manner which will later become clear, the remaining peripheral units 30 and 40 may be an input/output device for use as an input/output area or a random access memory (RAM) for use as a work area.

The output address signal is supplied to an address decoder 50. The address decoder 50 decodes the output address signal to produce one of first through third selection signals s1, s2, and s3. The first selection signal s1 is delivered to the ROM selection input terminal 23 of the read-only memory 20 as the ROM selection signal. The second and the third selection signals s2 and s3 are delivered, as the peripheral selection signals, to the peripheral selection input terminals 33 and 43 of the remaining peripheral units 30 and 40, respectively.

More specifically, the output address signal has upper (n - m + 1) bits arranged from the most significant bit 2ⁿ to the m-th bit 2^{m}. Namely, the upper (n - m + 1) bits consist with the m-th bit Aₘ to the n-th bit Aₙ. The address decoder 50 selects the read-only memory 20 as a selected peripheral unit when the upper (n - m + 1) bits Aₘ to Aₙ are not equal to predetermined bits bₘ to bₙ (not shown) arranged from the most significant bit 2ⁿ to the m-th bit 2^{m}. When the upper (n - m + 1) bits Aₘ to Aₙ are equal to predetermined bits bₘ to bₙ, the address decoder 50 selects one of the remaining peripheral units 30 and 40 as the selected peripheral unit. At any rate, the address decoder 50 serves as a peripheral selecting arrangement for selecting one of the peripheral units 20, 30, and 40 as the selected peripheral unit.

The CPU input/output port 12 of the central processing unit 10 produces an address selection control bit as one of output data. The address selection control bit is delivered to the peripheral input/output port 32 of the remaining peripheral unit 30 through the input/output bus 25. The remaining peripheral unit 30 includes a bit holding circuit 60 which is supplied with the address selection control bit. The bit holding circuit 50 is holding the address selection control bit as a held control bit X.

The held control bit X is supplied to a gate circuit 70 which is supplied with the upper (n - m + 1) bits Aₘ to Aₙ. Responsive to the held control bit X, the gate circuit 70 processes the m-th bit Aₘ of the output address signal into the processed bit G.

More particularly, operation of the gate circuit 70 is conditioned by the predetermined bits bₘ to bₙ and a particular bit bₓ. The particular bit bₓ is equal to the m-th bit 2^{m} of the predetermined bits, namely, the m-th bit bₘ. The gate circuit 70 produces the m-th bit Aₘ of the output address signal as the processed bit G when the held control bit X is not equal to the particular bit bₓ. The gate circuit 70 produces the m-th bit bₘ of the predetermined bits as the processed bit G when the held control bit X is equal to the particular bit bₓ and when the upper (n - m + 1) bits of the output address signal are equal to the predetermined bits except for the m-th bit. At any rate, the gate circuit 70 acts as a bit processing arrangement for processing, in response to the held control bit X, the m-th bit Aₘ of the output address signal into the processed bit G.

As mentioned before, the processed bit G is delivered to the m-th output terminal 21-m of the ROM address input port 21 through the connection line 27 as the m-th bit 2^{m} of the ROM input address signal. That is, the connection line 27 serves as a bit supplying arrangement for supplying the processed bit G as the m-th bit 2^{m} of the ROM input address signal to the read-only memory 20.

With this structure, the central processing unit 10 is directly capable of accessing an address area of 2ⁿ⁺¹ bytes as a directly-accessible address area. The directly-accessible address area is divided into first and second address areas. The first address area is an area in which the upper (n - m + 1) bits Aₘ to Aₙ of the output address signal are equal to the predetermined bits bₘ to bₙ. The second address area is another area in which the upper (n - m + 1) bits Aₘ to Aₙ of the output address signal are not equal to the predetermined bits bₘ to bₙ. The First address area is assigned to the remaining peripheral units 30 and 40. The second address area is assigned to the read-only memory 20. Inasmuch as the read-only memory 20 has the program memory area of 2ⁿ⁺¹ bytes, the second address area is narrower than the program memory area. In this state, the central processing unit 10 can not access all of the program memory area. However, the central processing unit 10 can access all of the program memory area by changing the address selection control bit in the manner which will presently be described.

The description will proceed to operation of the data processing system illustrated in Fig. 1.

At first, the description will be made as regards a first case where the central processing unit 10 accesses one of the remaining peripheral units 30 and 40. In this event, the central processing unit 10 produces the output address signal in which the upper (n - m + 1) bits Aₘ to Aₙ of the output address signal are equal to the predetermined bits bₘ to bₙ. When the upper (n - m + 1) bits Aₘ to Aₙ are equal to the predetermined bits bₘ to bₙ, the address decoder 50 produces one of the second and the third selection signals s2 and s3 that is determined by the zeroth through the (m - 1)-th bits A₀ to Aₘ₋₁ of the output address signal. In other words, the address decoder 50 selects one of the remaining peripheral units 30 and 40 as the selected peripheral unit.

The program memory area of the read-only memory 20 is divided into first, second, and third memory areas. The first memory area is an area where the m-th through the n-th bits of the ROM input address signal are equal to the predetermined bits bₘ to bₙ. The second memory area is another area where the m-th through the n-th bits of the ROM input address signal are equal to the predetermined bits bₘ to bₙ except for the m-th bit 2^{m}. The third memory area is a remaining area equal to combination of areas which are other than the first and the second memory areas among the program memory area.

The description will be made as regards a second case where the central processing unit 10 accesses the second and the third memory areas of the program memory area of the read-only memory 20. In this event, the central processing unit 10 produces the address selection control bit which is not equal to the particular bit bₓ. Supplied with the address selection control bit, the bit holding circuit 60 holds the address selection control bit as the held control bit X. After the address selection control bit is produced, the central processing unit 10 produces the output address signal in which the upper (n - m + 1) bits Aₘ to Aₙ of the output address signal are not equal to the predetermined bits bₘ to bₙ. Responsive to the output address signal, the address decoder 50 selects the read-only memory 20 as the selected peripheral unit. Responsive to the held control bit X, the gate circuit 70 produces the m-th bit Aₘ of the output address signal as the processed bit G. Accordingly, the read-only memory 20 is supplied with the output address signal as the input address signal.

The description will be made as regards a third case where the central processing unit 10 accesses the first and the third memory areas of the program memory area of the read-only memory 20. In this event, the central processing unit 10 produces the address selection control bit which is equal to the particular bit bₓ. Supplied with the address selection control bit, the bit holding circuit 60 holds the address selection control bit as the held control bit X. After the address selection control bit is produced, the central processing unit 10 produces the output address signal in which the upper (n - m + 1) bits of the output address signal are not equal to the predetermined bits. Responsive to the output address signal, the address decoder 50 selects the read-only memory 20 as the selected peripheral unit.

It will be presumed that the central processing unit 10 produces the output address signal in which the upper (n - m + 1) bits of the output address signal are equal to the predetermined bits except for the m-th bit. In this event, the gate circuit 70 produces the m-th bit bₘ of the predetermined bits as the processed bit G. Accordingly, the read-only memory 20 is supplied with the input address signal equal to the output address signal except for the m-th bit 2^{m}. That is, the output address signal is supplied to the read-only memory 20 as the input address signal with the m-th bit bₘ of the predetermined bits substituted for the m-th bit Aₘ of the output address signal. In the third case, the central processing unit 10 can access not only the remaining peripheral units 30 and 40 but also the first and the third memory areas of the program memory area of the read-only memory 20.

As a result, the central processing unit 10 is capable of accessing all of the program memory area of the read-only memory 20.

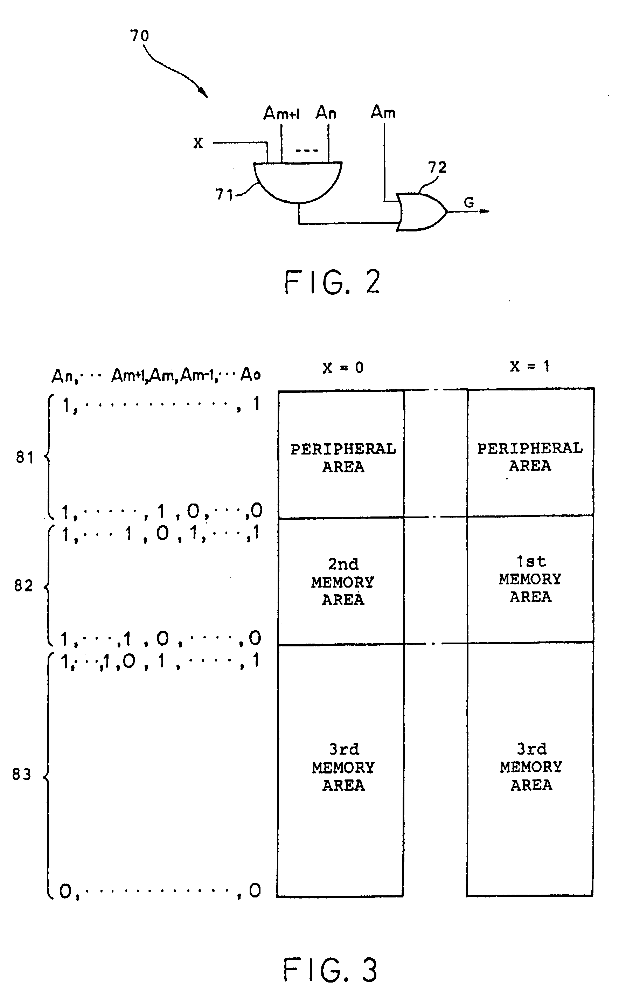

Fig. 2 shows an example of the gate circuit 70. For the example being illustrated, each of the predetermined bits bₘ to bₙ has a logic one value. The particular bit bₓ has a logic one value. The gate circuit 70 comprises an AND circuit 71 and an OR circuit 72. The AND circuit 71 carries out an AND operation on the held control bit X and the (n - m) bits of the upper (n - m + 1) bits except for the m-th bit Aₘ, namely, Aₘ₊₁ to Aₙ to produce an AND'ed bit. The OR circuit 72 carries out an OR operation on the AND'ed bit and the m-th bit Aₘ of the upper (n - m + 1) bits to produce an OR'ed bit as the processed bit G.

Fig. 3 shows an address space which the central processing unit 10 can use when the gate circuit 70 shown in Fig. 2 is employed. The address space is divided into first, second, and third partial address spaces 81, 82, and 83. The first partial address space 81 is a space where each of the upper (n - m + 1) bits Aₘ to Aₙ of the output address signal has a logic one value. The zeroth through the (m-1)-th bits A₀ to Aₘ₋₁ are variable. The second partial address space 82 is another space where each of the (n - m) bits Aₘ₊₁ to Aₙ of the upper (n - m + 1) bits has a logic one value and the m-th bit Aₘ of the upper (n - m + 1) bits has a logic zero value. The third partial address space 83 is a remaining space equal to combination of spaces which are other than the first and the second partial address spaces 81 and 82 among the address space of the central processing unit 10.

The first through the third partial address spaces 81 to 83 are mapped into memory and peripheral areas when the held control bit X has a logic zero or a logic one value, that is, the X = 0 and X = 1. More particularly, the first partial address space 81 is mapped into the peripheral area which is used by the remaining peripheral units 30 and 40 no matter whether the held control bit X has the logic zero value or the logic one value. The third partial address space 83 is mapped into the third memory area of the program memory area of the read-only memory 20 no matter whether the held control bit X has the logic zero value or the logic one value. The second partial address space 82 is mapped into the second memory area of the program memory area of the read-only memory 20 when the held control bit X has the logic zero value. The second partial address space 82 is mapped into the first memory area of the program memory area of the read-only memory 20 when the held control bit X has the logic one value.

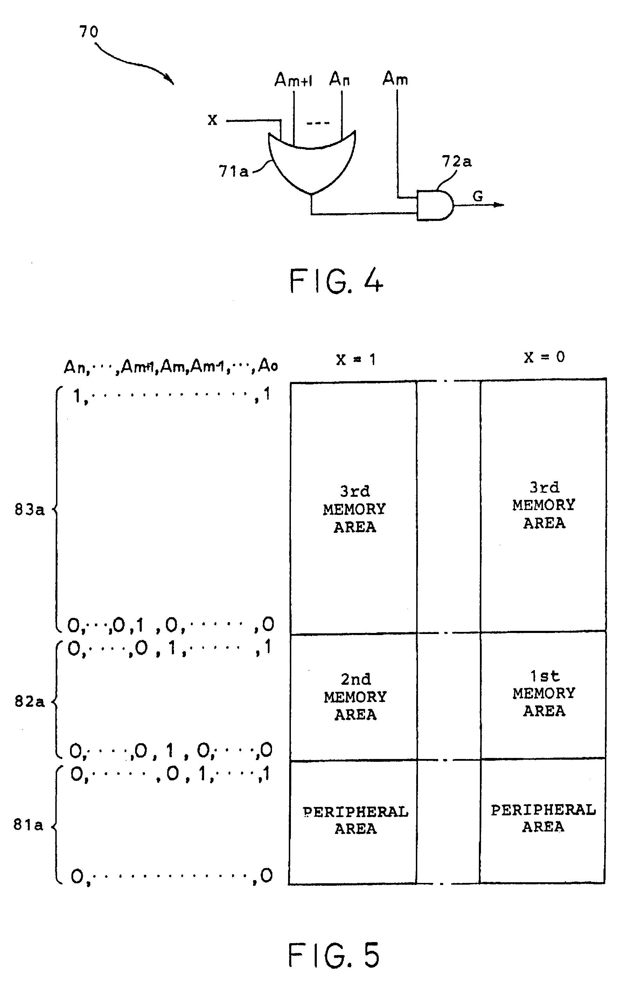

Fig. 4 shows another example of the gate circuit 70. For the example being illustrated, each of the predetermined bits bₘ to bₙ has a logic zero value. The particular bit bₓ has a logic zero value. The gate circuit 70 comprises an OR circuit 71a and an AND circuit 72a. The OR circuit 71a carries out an OR operation on the held control bit X and the (n - m) bits of the upper (n - m + 1) bits except for the m-th bit Aₘ, namely, Aₘ₊₁ to Aₙ to produce an OR'ed bit. The AND circuit 72a carries out an AND operation on the OR'ed bit and the m-th bit Aₘ of the upper (n - m + 1) bits to produce an AND'ed bit as the processed bit G.

Fig. 5 shows an address space which the central processing unit 10 can use when the gate circuit 70 shown in Fig. 4 is employed. The address space is divided into first, second, and third partial address spaces 81a, 82a, and 83a. The first partial address space 81a is a space where each of the upper (n - m + 1) bits Aₘ to Aₙ of the output address signal has a logic zero value. The second partial address space 82a is another space where each of the (n - m) bits Aₘ₊₁ to Aₙ of the upper (n - m + 1) bits has a logic zero value and the m-th bit Aₘ of the upper (n - m + 1) bits has a logic one value. The third partial address space 83a is a remaining space equal to a space which is other than the first and the second partial address spaces 81a and 82a among the address space of the central processing unit 10.

The first partial address space 81a is mapped into the peripheral area no matter whether the held control bit X has the logic one value of the logic zero value. The third partial address space 83a is mapped into the third memory area of the program memory area of the read-only memory 20 no matter whether the held control bit X has the logic one value of the logic zero value. The second partial address space 82a is mapped into the second memory area of the program memory area of the read-only memory 20 when the held control bit X has the logic one value. The second partial address space 82a is mapped into the first memory area of the program memory area of the read-only memory 20 when the held control bit X has the logic zero value.

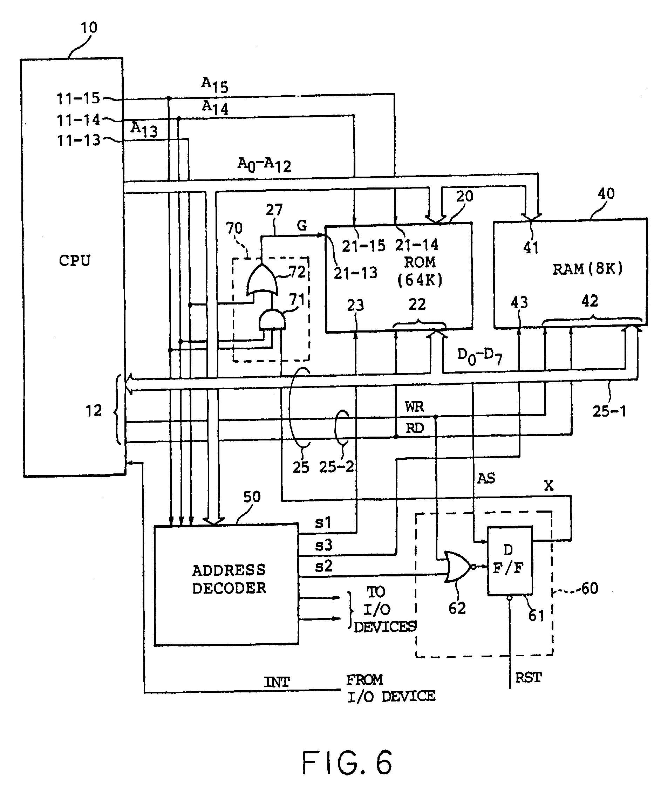

Fig. 6 shows an example of the data processing system according to this invention that is control equipment for use in an automobile telephone terminal. For the example being illustrated, the first predetermined natural number n is equal to fifteen. The second predetermined natural number m is equal to thirteen. It is assumed that each of the predetermined bits b₁₃ to b₁₅ has the logic one value and the particular bit bₓ has the logic one value.

In the example being illustrated, the remaining peripheral unit 40 is the random access memory (RAM) for use as the work area. The input/output bus 25 is divided into the data bus and the control bus which are depicted at 25-1 and 25-2, respectively. The central processing unit 10 delivers a read-out instruction signal RD and a write-in instruction signal WR to the control bus 25-2. The central processing unit 10 also delivers the address selection control bit depicted at AS to the bit holding circuit 60 through the data bus 25-1. The central processing unit 10 receives an interruption signal INT from one of input/output (I/O) devices (not shown) which are the remaining peripheral units. A combination of the input/output devices is for use as an input/output area. The read-only memory 20 has the memory capacity of 64 Kbytes. The random access memory has a memory capacity of 8 Kbytes.

The bit holding circuit 60 comprises a type D flip-flop 61 and an NOR circuit 62. Responsive to the write-in instruction signal WR supplied from the central processing unit 10 and to the second selection signal s2 supplied from the address decoder 50, the NOR circuit 62 produces a holding instruction signal. Responsive to the holding instruction signal, the type D flip-flop 61 holds the address selection control bit AS as the held control bit X. Supplied with a reset signal RST, the type D flip-flop 61 produces the held control bit X having the logic zero value.

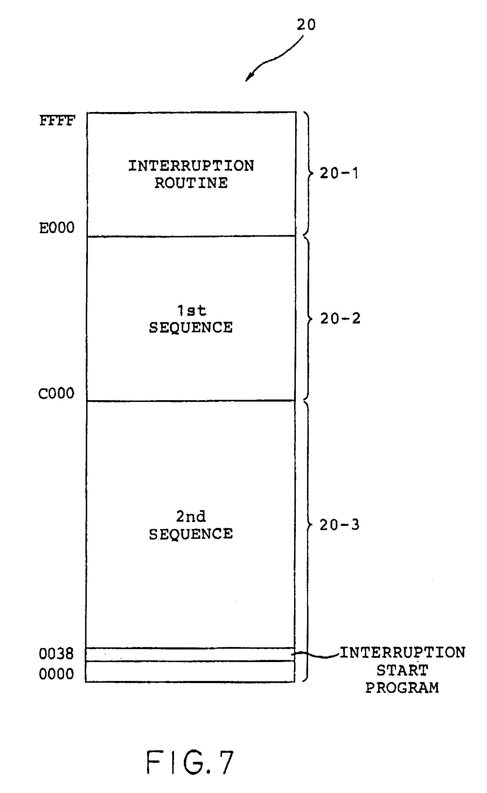

Referring to Fig. 7, the program memory area of the read-only memory 20 is divided into the first, the second, and the third memory areas which are depicted at 20-1, 20-2, and 20-3, respectively. The first memory area 20-1 is indicated by an address extent which is between hexadecimal E000 and hexadecimal FFFF. The first memory area 20-1 memorizes an interruption routine. The second memory area 20-2 is indicated by another extent which is between hexadecimal C000 and hexadecimal DFFF. The second memory area 20-2 memorizes a first sequence. The third memory area 20-3 is indicated by a remaining extent which ranges from hexadecimal 0000 to hexadecimal BFFF. The third memory area 20-3 memorizes a second sequence and an interruption start program which is memorized in a memory address of hexadecimal 0038.

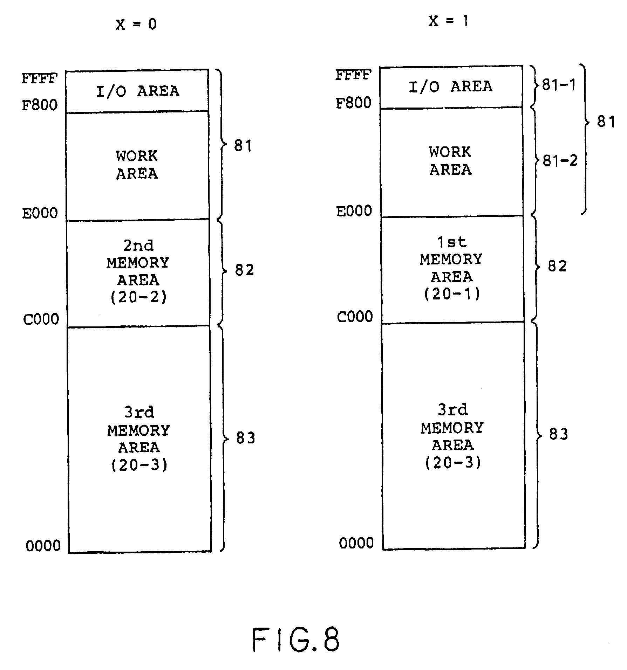

Referring to Fig. 8, the first partial address space 81 is indicated by an address extent ranging from hexadecimal E000 to hexadecimal FFFF. The first partial address space 81 is divided into first and second portions 81-1 and 81-2. The first portion 81-1 is indicated by an address extent between hexadecimal F800 and hexadecimal FFFF. The second portion is indicated by another address extent between hexadecimal E000 and hexadecimal E7FF. The first portion 81-1 of the first partial address space 81 is mapped into the input/output area no matter whether the held control bit X has the logic zero value or the logic one value. The second portion 81-2 of the first partial address space 81 is mapped into the work area no matter whether the held control bit X has the logic zero value or the logic one value.

The third partial address space 83 is indicated by an address extent between hexadecimal 0000 and hexadecimal BFFF. The third partial address space 83 is mapped into the third memory area 20-3 for the second sequence and the interruption start program no matter whether the held control bit X has the logic zero value or the logic one value. The second partial memory area 20-2 is indicated by an address extent between hexadecimal C000 and hexadecimal DFFF. The second partial memory area 20-2 is mapped into the second memory area 20-2 for the first sequence when the held control bit X has the logic zero value. The second partial memory area 20-2 is mapped into the first memory area 20-1 for the interruption routine when the held control bit X has the logic one value.

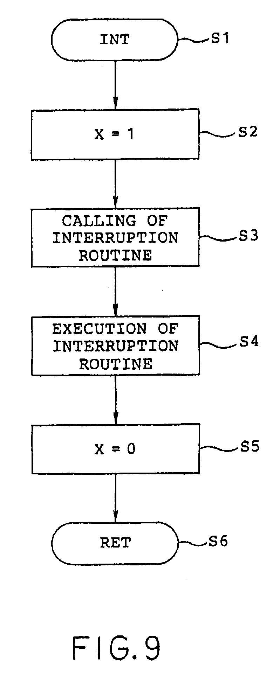

Referring to Fig. 9, the description will proceed to operation of the control equipment of the automobile telephone terminal shown in Fig. 6. In the automobile telephone terminal, a real time processing is activated by interruption.

Supplied with the reset signal RST, the bit holding circuit 60 produces the held control bit X having the logic zero value. In this event, the central processing unit 10 can access only a combination of the second and the third memory areas 20-2 and 20-3 of the program area of the read-only memory 20. When the central processing unit 10 receives the interruption signal INT from one of the input/output devices at a first stage S1, the central processing unit 10 produces the output address signal indicative of an address of hexadecimal 0038. Responsive to the output address signal, the read-only memory 20 delivers the interruption start program to the central processing unit 10 through the data bus 25-1. Responsive to the interruption start program, the central processing unit 10 sends the address selection control bit AS of logic one value to the bit holding circuit 60. Responsive to the address selection control bit AS, the bit holding circuit 60 produces the held control bit X having the logic one value at a second stage S2.

The central processing unit 10 calls the interruption routine at a third stage S3 and executes the interruption routine at a fourth stage S4. When execution of the interruption routine comes to an end, the central processing unit 10 controls the bit holding circuit 60 to make the bit holding circuit 60 produce the held control bit X having the logic zero value at a fifth stage S5. Thereafter, the process returns to a point of one of the first and the second sequences at which the interruption occurs at a sixth stage S6.

While this invention has thus far been described in conjunction with a preferred embodiment thereof, it will readily be possible for those skilled in the art to put this invention into practice in various other manners. For example, the gate circuit 70 illustrated in Fig. 1 may process one of the upper (n- m + 1) bits of the output address signal except for the m-th bit into the processed bit. In addition, gate circuit 70 may process a plurality of bits of the output address signal into a plurality of processed bits which are supplied to the read-only memory 20.

## Claims

1. A data processing system including a central processing unit (10) for producing an output address signal (A₀-Aₙ) which consists of n + 1 bits arranged from a most significant bit 2ⁿ to a least significant bit 2⁰, where n represents a first predetermined natural number, a specific peripheral unit (20) for receiving an input address signal (21) consistingof n + 1 bits arranged from the most significant bit 2ⁿ to the least significant bit 2⁰, other peripheral units (30, 40), a peripheral selecting means (50) connected to the central processing unit (10) and to the specific peripheral unit (20) and the other peripheral units (30, 40) for selecting in response to the output address signal, one of the specific peripheral unit (20) and of the other peripheral units (30, 40) as a selected peripheral unit, bit processing means (70) connected to the central processing unit (10) for processing particular bits of the output address signal into a processed bit, characterized in that among the n + 1 bits of the output address signal the specific peripheral unit (20) is supplied with n bits as the n bits among the n + 1 bits of the input address signal, the n bits of each of the output and the input address signals being the corresponding one of the n + 1 bits except for an m-th address bit 2^{m} as counted from the least significant bit 2⁰, where m represents a second predetermined natural number which is less than the first predetermined natural number, the data processing system being further characterised in that it includes bit holding means (60) for holding an address selection control bit produced by the central processing unit (10) as a held control bit (X) and bit supplying means (27) connected to the bit processing means (70) and to the specific peripheral unit (20) for supplying a processed bit (G) generated by the bit processing means (70) as the m-th address bit 2^{m} of the input address signal to the specific peripheral unit (20), the peripheral selecting means (50) selecting one of the other peripheral units (30, 40) as the selected peripheral unit when all the bits from the m-th address bit 2^{m} to the most significant address bit 2ⁿ of the output address signal have a first binary value, the peripheral selecting means (50) selecting the specific peripheral unit (20) as the selected peripheral unit when not all the bits from the m-th address bit 2^{m} to the most significant address bit 2ⁿ of the output address signal have the first binary value, the bit processing means (70) being connected to the bit holding means (60) and being supplied with the m-th through the n-th address bits 2^{m} to 2ⁿ of the output address signal as the particular bits of the output address signal, where when all the m+1-th through the n-th address bits 2^{m+1} to 2ⁿ of the output address signal have the first binary value and the m-th address bit 2^{m} of the output address signal has a second binary value different from the first binary value, the bit processing means (70) outputs the processed bit (G) equal in value to the second binary value when the held control bit (X) has the second binary value, and outputs the processed bit (G) equal in value to the first binary value when the held control bit (X) has the first binary value.

2. A data processing system as claimed in claim 1, characterized in that the bit holding means (60) is included in a particular one (30) of the other peripheral units.

3. A data processing system as claimed in claim 1, characterized in that the specific peripheral unit (20) is a read-only memory.

4. A data processing system as claimed in claim 1, characterized in that the first and the second binary values have logic one and zero values, respectively, the bit processing means (70) includes an AND circuit (71) for carrying out an AND operation on the held control bit (X) and the m+1-th through the n-th address bits 2^{m+1} to 2ⁿ of the output address signal to produce a first AND'ed bit and an OR circuit (72) for carrying out an OR operation on the first AND'ed bit and the m-th address bit 2^{m} of the output address signal to produce a first OR'ed bit as the processed bit (G).

5. A data processing system as claimed in claim 1, characterized in that the first and the second binary values have logic zero and one values, respectively, the bit processing means (70) includes an OR circuit (71a) for carrying out an OR operation on the held control bit (X) and the m+1-th through the n-th address bits 2^{m+1} to 2ⁿ of the output address signal to produce a second OR'ed bit and an AND circuit (72a) for carrying out an AND operation on the second OR'ed bit and the m-th address bit 2^{m} of the output address signal to produce a second AND'ed bit as the processed bit (G).

## Patentansprüche

1. Datenverarbeitungssystem mit einer zentralen Verarbeitungseinheit (10) zum Erzeugen eines Ausgabeadreßsignals (A₀-Aₙ), das aus n+1 Bits besteht, die von einem hochwertigsten Bit 2ₙ zu einem niederwertigsten Bit 2⁰ angeordnet sind, wobei n eine erste vorgegebene natürliche Zahl darstellt, einer speziellen Periphereinheit (20) zum Empfangen eines Eingabeadreßsignals (21), das aus n+1 Bits besteht, die von dem hochwertigsten Bit 2ₙ zum niederwertigsten Bit 2⁰ angeordnet sind, anderen Periphereinheiten (30,40), einer mit der zentralen Verarbeitungseinheit (10) und mit der speziellen Periphereinheit (20) und den anderen Periphereinheiten verbundenen Peripherauswahleinrichtung (50), um als Antwort auf das Ausgabeadreßsignal unter der speziellen Periphereinheit (20) und den anderen Periphereinheiten (30,40) eine bestimmte als ausgewählte Periphereinheit auszuwählen, einer mit der zentralen Verarbeitungseinheit (10) verbundenen Bitverarbeitungseinrichtung (70) zum Verarbeiten bestimmter Bits des Ausgabeadreßsignals in ein verarbeitetes Bit, dadurch gekennzeichnet, daß von den n+1 Bits des Ausgabeadreßsignals die spezielle Periphereinheit (20) mit n Bits versorgt wird, die n Bits der n+1 Bits des Eingabeadreßsignals bilden, wobei sich n Bits der n+l Bits des Ausgabe- und Eingabeadreßsignals jeweils entsprechen, mit Ausnahme eines m-ten Adreßbits 2^{m}, gezählt vom niederwertigsten Bit 2⁰, wobei m eine zweite vorgegebene natürliche Zahl darstellt, die kleiner als die erste vorgegebene natürliche Zahl ist, wobei das Datenverarbeitungssystem ferner dadurch gekennzeichnet ist, daß es eine Bithalte-Einrichtung (60) zum Halten eines von der zentralen Verarbeitungseinheit (10) erzeugten Adreßauswahl-Steuerbits als gehaltenes Steuerbit (X) und eine mit der Bitverarbeitungseinrichtung (70) und der speziellen Periphereinheit (20) verbundene Bitzuführungseinrichtung (27) zum Zuführen eines von der Bitverarbeitungseinheit (70) als m-tes Adreßbit 2^{m} des Eingabeadreßsignals erzeugten, verarbeiteten Bits (G) zu der speziellen Periphereinheit (20) aufweist, wobei die Peripherauswahleinheit (50) unter den anderen Periphereinheiten (30,40) eine bestimmte als die ausgewählte Periphereinheit auswählt, wenn alle Bits vom m-ten Adreßbit 2^{m} zum hochwertigsten Adreßbit 2ⁿ des Ausgabeadreßsignals einen ersten Binärwert haben, und die Peripherauswahleinrichtung (50) die spezielle Periphereinheit (20) als ausgewählte Periphereinheit auswählt, wenn nicht alle Bits vom m-ten Adreßbit 2^{m} zum hochwertigsten Adreßbit 2ⁿ des Ausgabeadreßsignals den ersten Binärwert haben, wobei die Bitverarbeitungseinrichtung (70) mit der Bithalte-Einrichtung (60) verbunden ist und mit dem m-ten bis n-ten Adreßbit 2^{m} bis 2ⁿ des Ausgabeadreßsignals als die bestimmten Bits des Ausgabeadreßsignals versorgt wird, wobei, wenn durchgehend vom m+1-ten bis zum n-ten alle Adreßbits 2^{m+1} bis 2ⁿ des Ausgabeadreßsignals den ersten Binärwert haben und das m-te Adreßbit 2^{m} des Ausgabeadreßsignals einen zweiten, vom ersten Binärwert verschiedenen Binärwert hat, die Bitverarbeitungseinrichtung (70) das verarbeitete Bit (G) mit einem Wert gleich dem des zweiten Binärwerts ausgibt, wenn das gehaltene Steuerbit (X) den zweiten Binärwert hat und das verarbeitete Bit (G) mit einem Wert gleich dem des ersten Binärwerts ausgibt, wenn das gehaltene Steuerbit (X) den ersten Binärwert hat.

2. Datenverarbeitungssystem nach Anspruch 1, dadurch gekennzeichnet, daß die Bithalte-Einrichtung (60) in einer bestimmten (30) der anderen Periphereinheiten enthalten ist.

3. Datenverarbeitungssystem nach Anspruch 1, dadurch gekennzeichnet, daß die spezielle Periphereinheit (20) ein Festspeicher ist.

4. Datenverarbeitungssystem nach Anspruch 1, dadurch gekennzeichnet, daß der erste bzw. der zweite Binärwert den Wert logisch Eins bzw. logisch Null hat, die Bitverarbeitungseinrichtung (70) einen UND-Schaltkreis (71), um mit dem gehaltenen Steuerbit (X) und den m+1-ten bis n-ten Adreßbits 2^{m+1} bis 2ⁿ des Ausgabeadreßsignals eine UND-Operation auszuführen, um ein erstes UND-verknüpftes Bit zu erzeugen und einen ODER-Schaltkreis (72) aufweist, um mit dem ersten UND-verknüpften Bit und dem m-ten Adreßbit 2^{m} des Ausgabeadreßsignals eine ODER-Operation auszuführen, um ein erstes ODER-verknüpftes Bit als verarbeitetes Bit (G) zu erzeugen.

5. Datenverarbeitungssystem nach Anspruch 1, dadurch gekennzeichnet, daß der erste bzw. der zweite Binärwert den Wert logisch Null bzw. logisch Eins hat, die Bitverarbeitungseinrichtung (70) einen ODER-Schaltkreis (71a), um mit dem gehaltenen steuerbit (X) und den m+1-ten bis n-ten Adreßbits 2^{m+1} bis 2ⁿ des Ausgabeadreßsignals eine ODER-Operation auszuführen, um ein zweites ODER-verknüpftes Bit zu erzeugen und einen UND-Schaltkreis (72a) aufweist, um mit dem zweiten ODER-verknüpften Bit und dem m-ten Adreßbit 2^{m} des Ausgabeadreßsignals eine UND-Operation auszuführen, um ein zweites UND-verknüpftes Bit als verarbeitetes Bit (G) zu erzeugen.

## Revendications

1. Système de traitement de données comprenant une unité centrale de traitement (10) pour produire un signal d'adresse de sortie (A₀-Aₙ) qui est constitué de n + 1 bits disposés entre un bit de poids fort 2ⁿ et un bit de poids faible 2⁰, où n représente un premier nombre naturel prédéterminé, une unité périphériques spécifique (20) pour recevoir un signal d'adresse d'entrée (21) constitué de n + 1 bits disposés entre le bit de poids fort 2ⁿ et le bit de poids faible 2⁰, d'autres unités périphériques (30, 40), un moyen de sélection de périphérique (50) connecté à l'unité centrale de traitement (10) et à l'unité périphérique spécifique (20) et aux autres unités périphériques (30, 40) pour sélectionner en réponse au signal d'adresse de sortie, l'une de l'unité périphérique spécifique (20) et des autres unités périphériques (30, 40) comme unité périphérique sélectionnée, un moyen de traitement de bits (70) connecté à l'unité centrale de traitement (10) pour traiter des bits particuliers du signal d'adresse de sortie et donner un bit traité, caractérisé en ce que, parmi les n + 1 bits du signal d'adresse de sortie, l'unité périphérique spécifique (20) reçoit n bits comme les n bits parmi les n + 1 bits du signal d'adresse d'entrée, les n bits de chacun des signaux d'adresse de sortie et d'entrée étant le bit correspondant des n + 1 bits à l'exception d'un m-ième bit d'adresse 2^{m} tel qu'il est compté à partir du bit de poids faible 2⁰, où m représente un second nombre naturel prédéterminé qui est inférieur au premier nombre naturel prédéterminé, le système de traitement de données étant en outre caractérisé en ce qu'il comprend un moyen de maintien de bit (60) afin de maintenir un bit de commande de sélection d'adresse produit par l'unité centrale de traitement (10) comme bit de commande maintenu (X) et un moyen de fourniture de bit (27) connecté au moyen de traitement de bit (70) et à l'unité périphérique spécifique (20) pour fournir un bit traité (G) produit par le moyen de traitement de bit (70) comme le m-ième bit d'adresse 2^{m} du signal d'adresse d'entrée à l'unité périphérique spécifique (20), le moyen de sélection de périphérique (50) sélectionnant l'une des autres unités périphériques (30, 40) comme l'unité périphérique sélectionnée lorsque tous les bits entre le m-ième bit d'adresse 2^{m} et le bit d'adresse de poids fort 2ⁿ du signal d'adresse de sortie ont la valeur binaire un, le moyen de sélection de périphérique (50) sélectionnant l'unité périphérique spécifique (20) comme l'unité périphérique sélectionnée lorsque tous les bits entre le m-ième bit d'adresse m et le bit d'adresse de poids fort 2ⁿ du signal d'adresse de sortie n'ont pas tous la première valeur binaire, le moyen de traitement de bit (70) étant connecté au moyen de maintien de bit (60) et étant alimenté avec les m-ième à n-ième bits d'adresse 2^{m} à 2ⁿ du signal d'adresse de sortie comme bits particuliers du signal d'adresse de sortie, où lorsque la totalité des m+1-ième à n-ième bits d'adresse 2^{m+1} à 2ⁿ du signal d'adresse de sortie ont la première valeur binaire et le m-ième bit d'adresse 2^{m} du signal d'adresse de sortie a une seconde valeur binaire différente de la première valeur binaire, le moyen de traitement de bit (70) sort le bit traité (G) égal en valeur à la seconde valeur binaire lorsque le bit de commande maintenu (X) a la seconde valeur binaire, et sort le bit traité (G) de valeur égale à la première valeur binaire lorsque le bit de commande maintenu (X) a la première valeur binaire.

2. Système de traitement de données selon la revendication 1, caractérisé en ce que le moyen de maintien de bit (60) est inclus dans une unité particulière (30) des autres unités périphériques.

3. Système de traitement de données selon la revendication 1, caractérisé en ce que l'unité périphérique spécifique (20) est une mémoire morte.

4. Système de traitement de données selon la revendication 1, caractérisé en ce que les première et seconde valeurs binaires ont les valeurs logique un et zéro, respectivement, le moyen de traitement de bit (70) comprend un circuit ET (71) pour exécuter une opération ET sur le bit de commande maintenu (X) et les m+1-ième à n-ième bits d'adresse 2^{m+1} à 2ⁿ du signal d'adresse de sortie pour produire un premier bit ayant subi une opération ET, et un circuit OU (72) pour exécuter une opération OU sur le premier bit ayant subi une opération ET et le m-ième bit d'adresse 2^{m} du signal d'adresse de sortie pour produire un premier bit ayant subi une opération OU comme le bit traité (G).

5. Système de traitement de données selon la revendication 1, caractérisé en ce que les première et seconde valeurs binaires ont la valeur logique zéro et la valeur logique un, respectivement, le moyen de traitement de bit (70) comprend un circuit OU (71a) pour exécuter une opération OU sur le bit de commande maintenu (X) et les m+l-ième à n-ième bits d'adresse 2^{m+1} à 2ⁿ du signal d'adresse de sortie pour produire un second bit ayant subi une opération OU, et un circuit ET (72a) pour exécuter une opération ET sur le second bit ayant subi une opération OU et le m-ième bit d'adresse 2^{m} du signal d'adresse de sortie pour produire un second bit ayant subi une opération ET comme le bit traité (G).
